(19) Europäisches Patentamt
European Patent Office
Office européen des brevets

(11) **EP 4 156 800 A1**

(12) **EUROPEAN PATENT APPLICATION**
published in accordance with Art. 153(4) EPC

(43) Date of publication:
**29.03.2023 Bulletin 2023/13**

(21) Application number: **21834077.6**

(22) Date of filing: **12.03.2021**

(51) International Patent Classification (IPC):
**H04W 52/14** (2009.01)

(52) Cooperative Patent Classification (CPC):
**H04W 52/14; H04W 52/36; H04W 74/08**

(86) International application number:
**PCT/CN2021/080518**

(87) International publication number:
**WO 2022/001177 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2020 CN 202010617617**

(71) Applicant: **Huawei Technologies Co., Ltd.
Longgang District,
Shenzhen,
Guangdong 518129 (CN)**

(72) Inventors:
• **CHEN, Yan
Shenzhen, Guangdong 518129 (CN)**
• **PENG, Bingguang
Shenzhen, Guangdong 518129 (CN)**
• **GUO, Ao
Shenzhen, Guangdong 518129 (CN)**
• **YANG, Jianhua
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **UPLINK POWER CONTROL METHOD, TERMINAL, AND CHIP**

(57) An uplink power control method, a terminal, and a chip are provided and relate to the field of communications technologies. The method includes: The terminal receives a downlink control message that is from a network device and that is used to indicate a modulation scheme used by a PUSCH and/or a PUSCH resource. When a to-be-sent uplink message is not a target message, the terminal sends the to-be-sent uplink message at first uplink transmit power; or when a to-be-sent uplink message is a target message, the terminal sends the to-be-sent uplink message at second uplink transmit power. The target message is a message carried on the PUSCH in a random access process, the first uplink transmit power is determined based on first MPR, the second uplink transmit power is greater than the first uplink transmit power, and the first MPR is obtained based on the modulation scheme used by the PUSCH, a waveform used by the PUSCH, and the PUSCH resource. This technical solution helps increase transmit power of the PUSCH in the random access process, so that a possibility of a random access failure of the terminal is reduced.

FIG. 6

**Description**

**CROSS-REFERENCE TO RELATED APPLICATIONS**

This application claims priority to Chinese Patent Application 202010617617.3, filed with the China National Intellectual Property Administration on June 30, 2020 and entitled "UPLINK POWER CONTROL METHOD AND TERMINAL", which is incorporated in this application by reference in its entirety.

**TECHNICAL FIELD**

This application relates to the field of communications technologies, and in particular, to an uplink power control method, a terminal, and a chip.

**BACKGROUND**

Currently, an upper limit of transmit power of a physical uplink shared channel (physical uplink shared channel, PUSCH) is related to a maximum output power capability and maximum output power reduction (maximum output power reduction, MPR) of a terminal. The MPR is determined based on a waveform used by the PUSCH, a modulation scheme used by the PUSCH, and a PUSCH resource location. MPR of different waveforms, modulation schemes, and PUSCH resource locations are pre-stored in the terminal before the terminal is delivered from a factory. Usually, a larger value of the MPR indicates larger margins of indicators such as an adjacent channel leakage ratio (adjacent channel leakage ratio, ACLR) and an error vector magnitude (error vector magnitude, EVM) and higher quality of an uplink signal sent by the terminal. Therefore, in the conventional technology, the value of the MPR is usually set to a maximum value specified in a communication protocol. However, when uplink synchronization between the terminal and a base station is implemented in a contention-based random access process, if the MPR is relatively large, the upper limit of the transmit power of the PUSCH is likely to be limited. Consequently, random access fails, and phenomena such as network freezing occur.

**SUMMARY**

Embodiments of this application provide an uplink power control method, a terminal, and a chip, to help increase transmit power of a PUSCH in a random access process, so that a possibility of a random access failure of the terminal is reduced, and a phenomenon of network freezing is reduced.

According to a first aspect, an embodiment of this application provides an uplink power control method, and the method specifically includes:

A terminal receives a downlink control message from a network device. The downlink control message is used to indicate a modulation scheme used by a PUSCH and/or a PUSCH resource. When a to-be-sent uplink message is not a target message, the terminal sends the to-be-sent uplink message to the network device at first uplink transmit power; or when a to-be-sent uplink message is a target message, the terminal sends the to-be-sent uplink message to the network device at second uplink transmit power. The target message is a message carried on the PUSCH in a random access process, the first uplink transmit power is determined based on first MPR and a maximum output power capability of the terminal, the first MPR is obtained based on the modulation scheme used by the PUSCH, the PUSCH resource, and a waveform used by the PUSCH, and the second uplink transmit power is greater than the first uplink transmit power

In this embodiment of this application, when the to-be-sent uplink message is not the message carried on the PUSCH in the random access process, the terminal sends the to-be-sent uplink message at the first uplink transmit power that is determined based on the first MPR and the maximum output power capability of the terminal; or when the to-be-sent uplink message is the message carried on the PUSCH in the random access process, the terminal sends the to-be-sent uplink message at the second uplink transmit power, and the second uplink transmit power is less than the first uplink transmit power. This helps increase transmit power of the PUSCH in the random access process, reduce a possibility of a random access failure of the terminal, reduce a phenomenon of network freezing, and improve user experience.

In a possible design, the first uplink transmit power is equal to maximum output power of the terminal minus the first MPR. The maximum output power of the terminal is maximum power that can be supported by the maximum output power capability of the terminal.

In a possible design, the second uplink transmit power is equal to the maximum output power of the terminal minus second MPR, and the second MPR is less than the first MPR.

In a possible design, the first MPR is obtained by reducing the second MPR by a first step, and the first step is greater than 0.

In a possible design, the first step is predefined, or the first step is determined by the terminal based on the second MPR. This helps simplify an implementation.

In a possible design, the second MPR is 0. This helps simplify the implementation and improve network access efficiency of the terminal.

In a possible design, the target message is a Msg3 (message 3) and/or an RRC connection setup complete message in the random access process. This helps increase a possibility that the Msg3 or the RRC connection setup complete message is successfully sent.

In a possible design, when the to-be-sent uplink message is not the target message, the to-be-sent uplink message is a message carried on the PUSCH after the terminal accesses a network.

In a possible design, the modulation scheme used by the PUSCH is one of Pi/2BPSK, QPSK, 16QAM, 64QAM, and/or 256QAM.

In a possible design, the waveform used by the PUSCH is one of DFT-s-OFDM or CP-OFDM.

In a possible design, the downlink control message is further used to indicate the waveform used by the PUSCH.

Alternatively, the terminal receives RRC signaling from the network device. The RRC signaling is used to indicate the waveform used by the PUSCH.

According to a second aspect, an embodiment of this application provides a terminal, and the terminal specifically includes a receiving module and a sending module.

The receiving module is configured to receive a downlink control message from a network device. The downlink control message is used to indicate a modulation scheme used by a PUSCH and/or a PUSCH resource.

The sending module is configured to: when a to-be-sent uplink message is not a target message, send the to-be-sent uplink message to the network device at first uplink transmit power; or when a to-be-sent uplink message is a target message, send the to-be-sent uplink message to the network device at second uplink transmit power.

The target message is a message carried on the PUSCH in a random access process, the first uplink transmit power is determined based on first MPR and a maximum output power capability of the terminal, the first MPR is obtained based on the modulation scheme used by the PUSCH, the PUSCH resource, and a waveform used by the PUSCH, and the second uplink transmit power is greater than the first uplink transmit power.

In a possible design, the first uplink transmit power is equal to maximum output power of the terminal minus the first MPR.

In a possible design, the second uplink transmit power is equal to the maximum output power of the terminal minus second MPR, and the second MPR is less than the first MPR.

In a possible design, the first MPR is obtained by reducing the second MPR by a first step, and the first step is greater than 0.

In a possible design, the first step is predefined, or the first step is determined by the terminal based on the second MPR.

In a possible design, the second MPR is 0.

In a possible design, the target message is a Msg3 and/or an RRC connection setup complete message in the random access process.

In a possible design, when the to-be-sent uplink message is not the target message, the to-be-sent uplink message is a message carried on the PUSCH after the terminal accesses a network.

In a possible design, the modulation scheme used by the PUSCH is one of Pi/2BPSK, QPSK, 16QAM, 64QAM, and/or 256QAM.

In a possible design, the waveform used by the PUSCH is one of DFT-s-OFDM or CP-OFDM.

In a possible design, the downlink control message is further used to indicate the waveform used by the PUSCH.

Alternatively, the receiving module receives RRC signaling from the network device. The RRC signaling is used to indicate the waveform used by the PUSCH.

According to a third aspect, an embodiment of this application further provides a chip, and the chip specially includes a processor and a communications interface.

The communications interface is configured to receive a downlink control message from a network device. The downlink control message is used to indicate a modulation scheme used by a PUSCH and/or a PUSCH resource.

The processor is configured to: when a to-be-sent uplink message is not a target message, control the communications interface to send the to-be-sent uplink message to the network device at first uplink transmit power; or when a to-be-sent uplink message is a target message, control the communications interface to send the to-be-sent uplink message to the network device at second uplink transmit power.

The target message is a message carried on the PUSCH in a random access process, the first uplink transmit power is determined based on first MPR and a maximum output power capability of the chip, the first MPR is obtained based on the modulation scheme used by the PUSCH, the PUSCH resource, and a waveform used by the PUSCH, and the second uplink transmit power is greater than the first uplink transmit power.

In a possible design, the first uplink transmit power is equal to maximum output power of the chip minus the first MPR.

In a possible design, the second uplink transmit power is equal to the maximum output power of the chip minus second MPR, and the second MPR is less than the first MPR.

In a possible design, the first MPR is obtained by reducing the second MPR by a first step, and the first step is greater than 0.

In a possible design, the first step is predefined, or the first step is determined based on the second MPR.

In a possible design, the second MPR is 0.

In a possible design, the target message is a Msg3 and/or an RRC connection setup complete message in the random access process.

In a possible design, when the to-be-sent uplink message is not the target message, the to-be-sent uplink message is a message carried on the PUSCH after a network is accessed.

In a possible design, the modulation scheme used by the PUSCH is one of Pi/2BPSK, QPSK, 16QAM, 64QAM, and/or 256QAM.

In a possible design, the waveform used by the PUSCH is one of DFT-s-OFDM or CP-OFDM.

In a possible design, the downlink control message is further used to indicate the waveform used by the PUSCH.

Alternatively, the communications interface receives RRC signaling from the network device. The RRC signaling is used to indicate the waveform used by the PUSCH.

According to a fourth aspect, an embodiment of this application provides an apparatus, and the apparatus includes a processor, configured to implement the method in the first aspect or the possible designs of the first aspect. The apparatus may further include a memory, configured to store a computer program. The memory is coupled to the processor, and when executing the computer program stored in the memory, the processor may implement the method in any one of the first aspect and the possible designs of the first aspect. The apparatus may further include a communications interface. The communications interface is used by the apparatus to communicate with another device. For example, the communications interface may be a transceiver, a circuit, a bus, a module, or a communications interface of another type. The another device may be a network device, a terminal, or the like.

According to a fifth aspect, an embodiment of this application provides a computer-readable storage medium. The computer-readable storage medium stores a computer program. When the computer program is executed on a computer, the computer is enabled to perform the method in any one of the first aspect and the possible designs of the first aspect.

According to a sixth aspect, an embodiment of this application provides a computer program product, including a computer program. When the computer program is run on a computer, the computer is enabled to perform the method in any one of the first aspect and the possible designs of the first aspect.

In addition, for technical effects brought by any possible design manner in the second aspect to the sixth aspect, refer to technical effects brought by different design manners in the method part. Details are not described herein again.

**BRIEF DESCRIPTION OF DRAWINGS**

FIG. 1 is a schematic flowchart of a conventional contention-based random access process method;
FIG. 2 is a schematic flowchart of a 2-step contention-based random access process method;
FIG. 3 is a schematic diagram of a resource location according to an embodiment of this application;
FIG. 4 is a schematic diagram of a network architecture to which an embodiment of this application is applicable;
FIG. 5 is a schematic flowchart of an uplink power control method according to an embodiment of this application;
FIG. 6 is a schematic flowchart of another uplink power control method according to an embodiment of this application;
FIG. 7 is a schematic diagram of a structure of an apparatus according to an embodiment of this application; and
FIG. 8 is a schematic diagram of a structure of another apparatus according to an embodiment of this application.

**DESCRIPTION OF EMBODIMENTS**

In wireless communication, uplink synchronization between a terminal and a network device is implemented in a random access (random access, RA) process. Usually, when the terminal is in the following scenarios, the RA process is initiated: (1) Initial access from a radio resource control idle (radio resource control idle, RRC_IDLE) state, that is, RRC connection setup; (2) Radio resource control (radio resource control, RRC) connection reestablishment; (3) Cell handover (handover); (4) A scenario in which a synchronization status of an uplink of the terminal is uplink asynchronization, where, for example, when downlink data arrives, the terminal needs to respond to (hybrid automatic repeat request (hybrid automatic repeat request, HARQ) information (such as an acknowledgement (acknowledgement, ACK) or a non-acknowledgement (non-acknowledgement, NACK)) but the uplink is asynchronized; or when uplink data arrives, the uplink is asynchronized; (5) Transition from a radio resource control inactive state (transition from RRC _INACTIVE; (6) A scenario in which time alignment is established when a secondary cell (secondary cell, Scell) is added (to establish time alignment at SCell addition); (7) A request for other service information (request for other SI); and (8) A beam recovery request (beam recovery request).

Usually, the RA process is classified into a contention-based RA process and a non-contention-based RA process. In the non-contention-based RA process, the network device allocates a dedicated random access channel (random access channel, RACH) resource to the terminal for access. However, when the dedicated RACH resource is insufficient, the network device indicates the terminal to initiate the contention-based RA process. Alternatively, the terminal may initiate the contention-based RA process according to a requirement of the terminal, to reduce a possibility of a communication failure.

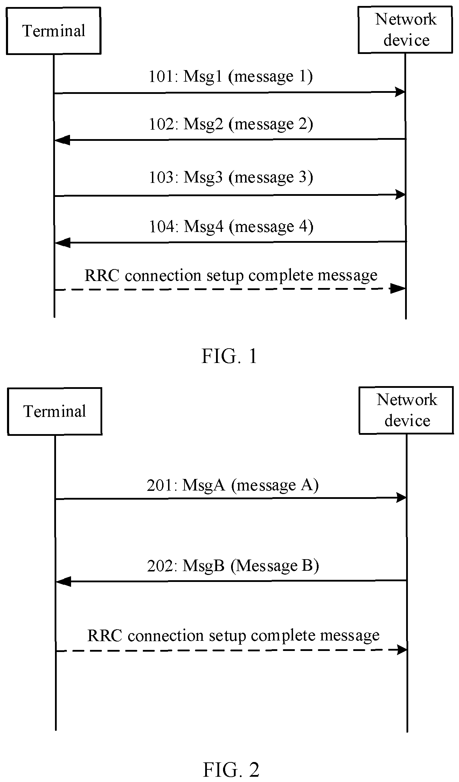

Specifically, as shown in FIG. 1, the conventional contention-based RA process may include four steps, which are respectively as follows:

101: The terminal sends a Msg1 (message 1, message 1) to the network device. The Msg1 is carried on the RACH, and is used to carry a preamble (preamble) sequence sent by the terminal to the network device. For the contention-based RA process, the preamble is randomly selected by the terminal. Usually, the preamble is carried on a physical random access channel (physical random access channel, PRACH) resource indicated by a random access radio network temporary identifier (random access radio network temporary identifier, RA-RNTI) and sent.

102: The network device receives the Msg1 from the terminal, and returns a Msg2 to the terminal. The Msg2 may be understood as a response to the Msg1, that is, a random access response (random access response, RAR), sent by the network device to the terminal, is carried on a physical downlink shared channel (physical downlink shared channel, PDSCH), and may include a temporary cell radio network temporary identifier (temporary cell radio network temporary identifier, temporary C-RNTI), information used to indicate an uplink resource allocated for a Msg3, timing advance (time advancing, TA), and the like. The uplink resource allocated for the Msg3 is a physical uplink shared channel (physical uplink shared channel, PUSCH) resource.

103: The terminal receives the Msg2 from the network device, and sends the Msg3 to the terminal. The Msg3 is carried on the PUSCH, and is used by the terminal to request the network device to establish a radio resource control (radio resource control, RRC) connection.

104: The network device receives the Msg3 from the terminal, and returns a Msg4 to the terminal. The Msg4 is carried on the PDSCH and is used by a base station to notify the terminal of successful random access contention.

With development of wireless communications technologies, to reduce a delay of a contention-based random access process, a two-step (2-step) non-contention-based random access process is introduced. Details are shown in FIG. 2, which are respectively as follows:

201: The terminal sends a MsgA to the network device. The MsgA includes functions of the Msg1 and the Msg3 in the conventional contention-based SA process.

202: The network device receives the MsgA from the terminal, and sends a MsgB to the terminal. The MsgB includes functions of the Msg2 and the Msg4 in the conventional contention-based SA process.

For the Msg1, the Msg2, the Msg3, and the Msg4, refer to related descriptions in FIG. 1. It may be understood that although the Msg1 and the Msg3 are sent in parallel, the Msg1 is carried on the RACH, and the Msg3 is carried on the PUSCH.

Further, in some embodiments, the terminal receives the Msg4 or the MsgB from the network device, and further sends a radio resource control (radio resource control, RRC) connection setup complete (RRC setup complete) message to the network device. The RRC setup complete message is carried on the PUSCH, and is used by the terminal to notify the base station that the random access process is completed.

Uplink transmit power of the PUSCH may be understood as transmit power used by a message carried on the PUSCH, and is limited by an upper limit of transmit power of the PUSCH. The upper limit of the transmit power of the PUSCH is related to a maximum output power capability of the terminal and power reduction.

For example, the upper limit of the transmit power of the PUSCH meets the following expression:

$$P_{cmax\_L,f,c} \le P_{cmax,f,c} \le P_{cmax\_H,f,c};$$

$$P_{cmax\_H,f,c} = \min\{P_{EMAX,c} - \Delta T_{C,c},$$

$$(P_{powerClass} - \Delta P_{powerClass}) - \max(\max(MPR_c, \text{A-}MPR_c) + \Delta T_{IB,c} + \Delta T_{C,c} + \Delta T_{RxSRS,c}), \text{P-}MPR_c)\};$$

$$P_{cmax\_H,f,c} = \min\{P_{EMAX,c}, P_{powerClass} - \Delta P_{powerClass}\}$$

$P_{cmax,f,c}$ is the upper limit of the transmit power of the PUSCH, $P_{cmax\_L,f,c}$ is a minimum value of the upper limit of the transmit power of the PUSCH, $P_{cmax\_H,f,c}$ is a maximum value of the upper limit of the transmit power of the PUSCH, $P_{EMAX,c}$ is maximum output power indicated by the network device to the terminal by using RRC signaling, $\Delta T_{C,c}$ is a constant, $P_{powerClass}$ is the maximum output power capability of the terminal, $\Delta P_{powerClass}$ is a constant, $MPR_c$ is a maximum output power reduction value, $A\text{-}MPR_c$ is an additional power reduction value, $\Delta T_{IB,c}$ is an additional power offset, $\Delta T_{RxSRS,c}$ is a constant, and $P\text{-}MPR_c$ is a maximum power reduction value when a standard of an amount of electromagnetic radiation absorbed by a human body from the terminal is met. Specifically, for $P_{cmax,f,c}$, $P_{cmax\_L,f,c}$, $P_{cmax\_H,f,c}$, $P_{EMAX,c}$, $\Delta T_{C,c}$, $P_{powerClass}$, $\Delta P_{powerClass}$, $MPR_c$, $A\text{-}MPR_c$, $\Delta T_{IB,c}$, $\Delta T_{RxSRS,c}$, and $P\text{-}MPR_c$, refer to related descriptions in 3GPP TS 38.101-1 V15.6.0. Details are not described herein again.

When some scenario-related constants in the foregoing expression about the upper limit of the transmit power of the PUSCH are ignored, and only the maximum output power capability of the terminal, $MPR_c$, and $P\text{-}MPR_c$ are considered, the expression of the upper limit of the transmit power of the PUSCH may be simplified into an expression 1:

$$P_{cmax} = P_{max} - \max(MPR, P - MPR) \qquad\qquad 1$$

$P_{cmax}$ is the upper limit of the transmit power of the PUSCH, $P_{max}$ is the maximum output power capability of the terminal, the MPR is the maximum output power reduction value, and the P-MPR is the maximum output power reduction value when the standard of the amount of electromagnetic radiation absorbed by the human body from the terminal is met.

The amount of electromagnetic radiation absorbed by the human body from the terminal may be measured by using a special absorption rate (specific absorption rate, SAR). The SAR indicates an amount of electromagnetic radiation absorbed by human tissue per kilogram within 6 minutes. Usually, a larger SAR indicates a larger amount of electromagnetic radiation absorbed by a person from a terminal. According to the federal communications commission (federal communications commission, FCC), the standard of the amount of electromagnetic radiation absorbed by the human body is that the SAR is lower than 1.6 watt/kilogram. In Europe and China, the standard of the amount of electromagnetic radiation absorbed by the human body is that the SAR is not higher than 2 watt/kilogram. Specifically, the P-MPR is determined by the terminal based on a distance between a mobile phone and the human body and the standard of the amount of electromagnetic radiation absorbed by the human body from the terminal.

Further, if impact of the P-MPR on an upper limit of transmit power of the terminal is not considered, the expression 1 may be further simplified into an expression 2:

$$P_{cmax} = P_{max} - MPR \qquad\qquad 2$$

It should be noted that the MPR is determined based on a waveform used by the PUSCH, a modulation scheme, and a PUSCH resource location. The waveform used by the PUSCH, the modulation scheme, and the PUSCH resource location are indicated by the network device to the terminal. MPR of different waveforms, modulation schemes, and PUSCH resource locations are pre-stored in the terminal before the terminal is delivered from a factory. Usually, the MPR does not exceed specifications of a communication protocol. For example, for a stipulation about the MPR in an NR protocol, refer to Table 1.

**Table 1**

| Modulation (modulation) | | MPR (dB) | | |
|---|---|---|---|---|
| | | Edge RB allocations | Outer RB allocations | Inner RB allocations |
| DFT-s-OFDM | Pi/2 BPSK | ≤3.5[1] | ≤1.2[1] | ≤1.2[1] |
| | | 0.5[2] | 0.5[2] | 0[2] |
| | QPSK | ≤1 | | 0 |
| | 16 QAM | ≤2 | | ≤1 |
| | 64 QAM | ≤2.5 | | |
| | 256 QAM | 4.5 | | |

(continued)

| Modulation (modulation) | | MPR (dB) | | |
| --- | --- | --- | --- | --- |
| | | Edge RB allocations | Outer RB allocations | Inner RB allocations |
| CP-OFDM | QPSK | ≤3 | | ≤1.5 |
| | 16 QAM | ≤3 | | ≤2 |
| | 64 QAM | ≤3.5 | | |
| | 256 QAM | ≤6.5 | | |
| Note 1: being applied to a time division duplexing (time division duplexing, TDD) mode when bandwidths of an uplink (uplink, UL) are n40, n41, n77, n78, and n79. Note 2: being applied to a frequency division duplex (frequency division duplexing, FDD) mode, or applied to the TDD mode when the bandwidth of the UL is except n40, n41, n77, n78, or n79. | | | | |

For example, when the waveform used by the terminal is CP-OFDM, the modulation scheme is QPSK, and when the PUSCH resource scheduled by the network device for the terminal is an inner RB, a maximum value of the MPR cannot exceed 1.5 dB. For example, if the maximum output power capability of the terminal is 23 dB, when the waveform used by the terminal is CP-OFDM, the modulation scheme is QPSK, and the PUSCH resource scheduled by the network device for the terminal is an inner RB, the terminal reduces 1.5 dB at most, that is, the upper limit of the transmit power of the PUSCH of the terminal may reach 21.5 dB.

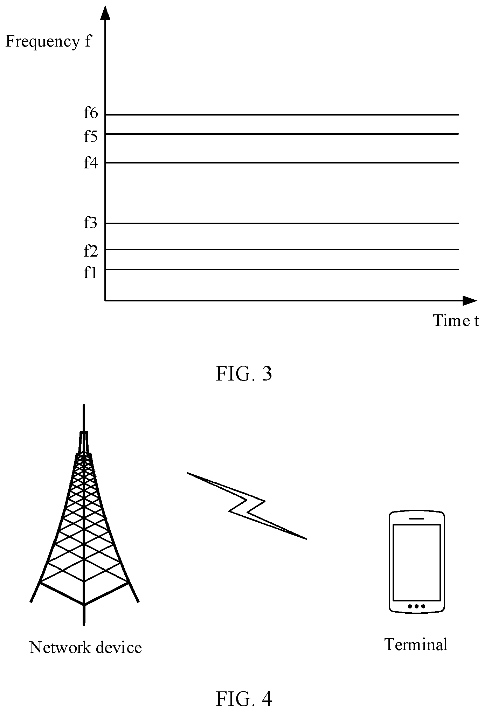

It should be noted that, in Table 1, an edge resource block (edge resource block, Edge RB) indicates an RB located on a frequency band boundary used for NR communication, and an outer resource block (outer resource block, Outer RB) is located between an inner resource block (inner resource block, Inner RB) and an edge RB. For example, a bandwidth of the frequency band used for NR communication is 20 M. FIG. 3 is a schematic diagram of a frequency band used for NR communication. An RB located between a frequency f1 and a frequency f2 or between a frequency f5 and a frequency f6 is an edge RB, an RB located between the frequency f2 and a frequency f3 or between a frequency f4 and the frequency f5 is an outer RB, and an RB located between the frequency f3 and the frequency f4 is an inner RB.

Usually, larger MPR indicates larger margins of performance indicators of uplink sent signals such as an ACLR and an EVM and higher quality of the uplink sent signals. Therefore, usually, for PUSCH resources at different locations and different modulation schemes and waveforms, the MPR stored in the terminal is a maximum value specified in the communication protocol. Take Table 1 as an example. For the outer RB, the QPSK, and the CP-OFDM, the maximum value of the MPR is 1.5 dB. Therefore, for the outer RB, QPSK, and CP-OFDM, the MPR stored in the terminal is 1.5 dB.

It should be noted that, take the ACLR as an example, and the margin of the ACLR is a difference between an ACLR obtained when the terminal determines that MPR is used as the upper limit of the transmit power of the PUSCH and an ACLR obtained when an uplink transmit performance requirement is exactly met. Therefore, when the terminal determines that the MPR used as the upper limit of the transmit power of the PUSCH is the maximum value in the communication protocol, the margin of the ACLR is the largest. The uplink transmit performance requirement may be defined by using the communication protocol. The margins of other indicators such as the EVM are similar to the margin of the ACLR, and are not described one by one herein. It may be understood that the MPR stored in the terminal for different waveforms and modulation schemes and resources at different locations may also be a value that does not exceed a value specified in the communication protocol when the indicators such as the ACLR and the EVM meet the uplink transmit performance requirement.

For example, take Table 1 as an example. For the outer RB, the QPSK, and the CP-OFDM, the maximum value of the MPR is 1.5 dB. Therefore, for the outer RB, the QPSK, and the CP-OFDM, the MPR stored in the terminal may be less than 1.5 dB. For example, for the outer RB, the QPSK, and the CP-OFDM, the MPR stored in the terminal is 1.3 dB. In this case, if the maximum output power capability of the terminal is 23 dB, the maximum value of the transmit power of the PUSCH of the terminal is 21.7 dB.

However, when uplink synchronization between the terminal and the base station is implemented in a contention-based random access process, if the MPR is relatively large, the upper limit of the transmit power of the PUSCH is likely to be limited. Consequently, random access fails, and phenomena such as network freezing occur. For example, the MPR stored for the inner RB, the QPSK, and the CP-OFDM is 1.5 dB. When a resource scheduled by the network device for the Msg3 is the inner RB, the modulation scheme is the QPSK, and the waveform is the CP-OFDM, the MPR determined by the terminal is 1.5 dB. Therefore, the terminal subsequently uses 1.5 dB to perform power reduction. Although the margins of the indicators such as the ACLR and the EVM reach the maximum, the upper limit of the transmit power of the PUSCH is limited. As a result, the Msg3 fails to be transmitted, and the random access of the terminal fails.

In view of this, an embodiment of this application provides an uplink power control method. A magnitude of MPR of a terminal in a random access process is reduced, and an upper limit of transmit power of the PUSCH in the random access process is increased. In this way, although margins of indicators such as an ACLR and an EVM are reduced, this helps increase a probability of successful random access, reduce a quantity of times of network frame freezing, and improve user experience. Further, for uplink communication after random access is performed on the terminal, the MPR may not need to be reduced. Although the upper limit of the transmit power of the PUSCH may be limited, the margins of the indicators such as the ACLR and the EVM are maintained, and signal quality is relatively high.

It should be understood that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following pieces (items)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

It should be understood that the terms used in this application are merely for the purpose of describing specific embodiments, and are not intended to limit this application. The terms "a", "the", and "this" of singular forms used in this application and the appended claims are also intended to include plural forms, unless otherwise specified in a context clearly.

In addition, although terms such as first, second, and third may be used in this application to describe various information, the information should not be limited to these terms. These terms are only used to differentiate information of a same type. For example, first information may also be referred to as second information without departing from the scope of this application. Similarly, second information may also be referred to as first information. Depending on the context, for example, words "if" used herein may be explained as "while" or "when" or "in response to determining".

FIG. 4 is a diagram of an architecture of a communications system to which embodiments of this application are applicable. As shown in the figure, the communications system in embodiments of this application includes a network device and a terminal. A communication manner between the terminal and the network device is wireless communication. In embodiments of this application, the terminal is a device with a wireless transceiver function, and may be referred to as terminal equipment (terminal equipment), user equipment (user equipment, UE), a mobile station (mobile station, MS), a mobile terminal (mobile terminal, MT), an access terminal device, a vehicle-mounted terminal device, an industrial control terminal device, a UE unit, a UE station, a mobile radio station, a remote station, a remote terminal device, a mobile device, a UE terminal device, a wireless communications device, a UE agent, a UE apparatus, or the like. A location of the terminal may be fixed or mobile. It should be noted that the terminal may support at least one wireless communications technology, for example, long term evolution (long term evolution, LTE), NR, and wideband code division multiple access (wideband code division multiple access, WCDMA). For example, the terminal may be a mobile phone (mobile phone), a tablet (pad), a desktop computer, a notebook computer, an all-in-one computer, a vehicle-mounted terminal, a virtual reality (virtual reality, VR) terminal, an augmented reality (augmented reality, AR) terminal, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal in a future mobile communication network, a terminal in a future evolved public land mobile network (public land mobile network, PLMN), or the like. For another example, the terminal in embodiments of this application may alternatively be an apparatus having a transceiver function, for example, a chip system. The chip system may include a chip, and may further include another discrete component.

In embodiments of this application, the network device is a device that provides a wireless access function for a terminal, and may also be referred to as an access network device, a radio access network (radio access network, RAN) device, or the like. The network device may support at least one wireless communications technology, such as LTE, NR, or WCDMA. For example, the network device includes but is not limited to: a next-generation NodeB (generation node B, gNB) in a fifth-generation mobile communications system (5th-generation, 5G), an evolved NodeB (evolved node B, eNB), a radio network controller (radio network controller, RNC), a node B (node B, NB), a base station controller (base station controller, BSC), a base transceiver station (base transceiver station, BTS), a home base station (for example, home evolved node B or home node B, HNB), a baseband unit (baseband unit, BBU), a transmission reception point (transmission reception point, TRP), a transmission point (transmission point, TP), a mobile switching center, a small cell, a pico cell, and the like. The network device may alternatively be a radio controller, a centralized unit (centralized unit, CU), and/or a distributed unit (distributed unit, DU) in a cloud radio access network (cloud radio access network, CRAN) scenario. Alternatively, the network device may be a relay station, an access point, a vehicle-mounted device, a terminal device, a wearable device, a network device in future mobile communication, a network device in a future evolved PLMN, or the like. In some embodiments, the network device may alternatively be an apparatus, for example, a chip system, that provides a wireless communication function for the terminal. For example, the chip system may include a chip, and may further include another discrete component.

It should be understood that the communications system shown in FIG. 4 is merely an example for description, and does not constitute a limitation on the communications system in embodiments of this application. For example, a quantity of network devices and a quantity of terminals in the communications system are not limited in embodiments of this application. For example, when the communications system in embodiments of this application includes a plurality of network devices, coordinated multipoint communication may be performed between the network devices. For example, the communications system includes a plurality of macro base stations and a plurality of micro base stations. Coordinated multipoint communication may be performed between the macro base stations, between the micro base stations, or between the macro base station and the micro base station.

It should be noted that the architecture and the service scenario of the communications system described in embodiments of this application are intended to describe the technical solutions in embodiments of this application more clearly, and do not constitute a limitation on the technical solutions provided in embodiments of this application. A person of ordinary skill in the art may know that: With evolution of the system architecture and emergence of a new service scenario, the technical solutions provided in embodiments of this application are also applicable to a similar technical problem.

The following describes an uplink power control method in embodiments of this application with reference to the communications system shown in FIG. 4.

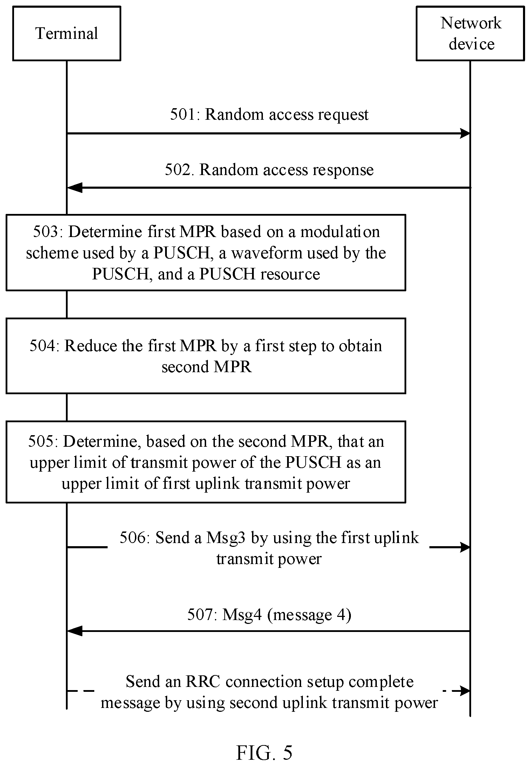

For example, FIG. 5 shows the uplink power control method according to an embodiment of this application. The method specifically includes the following steps.

501: A terminal device sends a random access request to a network device. The random access request is used to initiate a contention-based random access process.

For example, the terminal may send the random access request to the network device after receiving first indication information of the network device. The first indication information is used to indicate the terminal to initiate the contention-based random access process. For another example, the terminal may further send a random access request to the network device during initial access. For example, the terminal may trigger the initial access when the terminal is powered on or an airplane mode is disabled. For another example, the terminal may further send a random access request to the network device during cell handover. Alternatively, the terminal sends a random access request to the network device when uplink asynchronization, RRC connection reestablishment, transition from RRC_INACTIVE, or the like occurs.

It should be noted that the foregoing description is merely an example for triggering the terminal to send the random access request to the network device, and is not intended to limit triggering the terminal to send the random access request to the network device in this embodiment of this application. In this embodiment of this application, the terminal may be alternatively triggered, in another manner, to send a random access request to the network device.

502: After receiving the random access request from the terminal, the network device sends the RAR to the terminal. The RAR is used to indicate a PUSCH modulation mode and/or a PUSCH resource. For example, the RAR includes PUSCH modulation information and PUSCH resource information. The PUSCH modulation information is used to indicate the PUSCH modulation mode, and the PUSCH resource information is used to indicate a location and size of the PUSCH resource.

It should be noted that when a wireless communications system supports only one waveform, the network device may not need to indicate, to the terminal, a waveform used by a PUSCH. For example, a waveform supported in LTE is DTF-s-OFDM. For the terminal, the network device may not need to indicate, to the terminal, the waveform used by the PUSCH, and the terminal may consider, by default, that the waveform used by the PUSCH is DFT-s-OFDM. Further, when a plurality of waveforms are supported, for example, in NR, two waveforms CP-OFDM and DFT-s-OFDM are supported. In some embodiments, the RAR may be further used to indicate the waveform by for the PUSCH. In this case, the RAR may further include PUSCH waveform indication information. Alternatively, the waveform used by the PUSCH may be indicated by the network device to the terminal by using RRC signaling. This is not limited.

In some embodiments, after receiving the random access request from the terminal, the network device may allocate a PUSCH resource to the terminal, determine a PUSCH modulation scheme, and the like based on a path loss, an interference level, and the like between the terminal and the network device. Further, when the PUSCH modulation information further indicates the waveform used by the PUSCH, the network device may further determine, from all supported waveforms based on the path loss, the interference level, and the like between the terminal and the network device, the waveform used by the PUSCH. It should be noted that the foregoing is merely an example for describing how to allocate the PUSCH resource and determine the PUSCH modulation scheme and waveform. Allocating the PUSCH resource and determining the PUSCH modulation scheme and waveform are a specific implementation inside the network device. This is not limited in this embodiment of this application.

503: After receiving the RAR sent by the network device, the terminal determines first MPR based on the PUSCH resource, the modulation scheme used by the PUSCH, and the waveform used by the PUSCH. The first MPR is MPR that is prestored in the terminal and that corresponds to the modulation scheme used by the PUSCH, the waveform used by the PUSCH, and the PUSCH resource.

For example, that the waveform used by the PUSCH is the CP-OFDM, the modulation scheme is the QPSK, and the PUSCH resource is an inner RB is used as an example. As shown in Table 1, when the waveform is the CP-OFDM, the modulation scheme is the QPSK, and the PUSCH resource is the inner RB, the MPR cannot exceed 1.5 dB at most. Therefore, in this case, the MPR stored by the terminal for the CP-OFDM, the QPSK, and the inner RB cannot exceed 1.5 dB. If the MPR stored by the terminal for the CP-OFDM, the QPSK, and the inner RB is 1 dB, the first MPR is 1 dB.

504: The terminal reduces the first MPR by a first step to obtain second MPR.

For example, the first step may be a fixed value, or may be predefined by using a protocol. For example, different first steps may be set for different waveforms, modulation schemes, and resources by using a communication protocol. For example, the first steps setting for the different waveforms, modulation schemes, and resources may be shown in Table 2.

**Table 2**

| Modulation (modulation) | | MPR (dB) | | |
| --- | --- | --- | --- | --- |
| | | Edge RB allocations | Outer RB allocations | Inner RB allocations |
| DFT-s-OFDM | Pi/2 BPSK | $N_{A1}{}^1$ | $N_{A2}{}^1$ | $N_{A3}{}^1$ |
| | | $N_{B1}{}^1$ | $N_{B2}{}^1$ | $0^2$ |
| | QPSK | $N_{C1}$ | | 0 |
| | 16 QAM | $N_{D1}$ | | $N_{D2}$ |
| | 64 QAM | $N_{E1}$ | | |
| | 256 QAM | $N_{F1}$ | | |
| CP-OFDM | QPSK | $N_{G1}$ | | $N_{G2}$ |
| | 16 QAM | $N_{H1}$ | | $N_{H2}$ |
| | 64 QAM | $N_{I1}$ | | |
| | 256 QAM | $N_{J1}$ | | |
| Note 1: being applied to a TDD mode when bandwidths of a UL are n40, n41, n77, n78, and n79. | | | | |
| Note 2: being applied to an FDD mode, or applied to the TDD mode when the bandwidth of the UL is except n40, n41, n77, n78, or n79. | | | | |

For example, the waveform used by the PUSCH is the CP-OFDM, the modulation scheme is the QPSK, and the PUSCH resource is the inner RB. As shown in Table 1, the first step corresponding to the CP-OFDM, the QPSK, and the inner RB is $N_{G1}$. In this case, the terminal reduces the first MPR by $N_{G1}$ to obtain the second MPR. It should be noted that, when the first MPR is less than $N_{G1}$, the terminal reduces the first MPR by $N_{G1}$, and the obtained second MPR is 0.

In some embodiments, the first step may be obtained through measurement when indicators such as an ACLR and an EVM meet uplink transmit performance requirement and margins of the indicators such as the ACLR and the EVM are the minimum, to avoid excessively poor signal quality.

It should be noted that the foregoing is merely an example for describing how to predefine the first step by using a protocol, and does not constitute a limitation on this embodiment of this application. Certainly, in this embodiment of this application, a first step range may be further predefined by using the protocol, and the terminal determines an actually used first step according to a requirement of the terminal.

For another example, the first step may alternatively be indicated by the network device to the terminal. For example, the network device may indicate the first step to the terminal based on the RAR. In this case, the terminal may first determine whether the first MPR is greater than the first step. If the first MPR is greater than the first step, the terminal reduces the first MPR by the first step to obtain the second MPR. In some other embodiments, if the first MPR is less than or equal to the first step, the terminal reduces the first MPR to 0, that is, the second MPR is 0. This helps to avoid overflow.

For another example, the first step may alternatively be determined by the terminal according to an algorithm or a policy. For example, when the indicators such as the ACLR and the EVM meet the uplink transmit performance requirement, the terminal uses, as the first step, a value by which the first MPR needs to be reduced when the margins of the indicators such as the ACLR and the EVM are reduced to 0 or a value less than a maximum margin. For another example, the first step is equal to the first MPR. In this case, a value of the second MPR is 0. For another example, a policy for determining the first step by the terminal is as follows: The first step is equal to a product of the first MPR and a weight coefficient. For example, if the weight coefficient is 0.5, the second MPR is half of the first MPR. The weight coefficient may be predefined by using the protocol, or may be indicated by the network device to the terminal. The foregoing is described merely by using an example in which the weight coefficient is 0.5. A value of the weight coefficient is not limited in this embodiment of this application. It may be understood that the weight coefficient herein is a value greater than 0 and less than or equal to 1. For example, the weight coefficient may be determined based on the margins of the indicators such as the ACLR and the EVM. It should be noted that, in this embodiment of this application, the weight coefficient may alternatively be determined in another manner. This is not limited.

The foregoing is merely an example for describing a manner of obtaining the first step. A specific manner of obtaining the first step is not limited in this embodiment of this application.

505: The terminal determines, based on a maximum output power capability of the terminal and the second MPR, that an upper limit of transmit power of the PUSCH used to carry the Msg3 is an upper limit of first transmit power.

506: The terminal sends the Msg3 to the network device by using first uplink transmit power. The first uplink transmit power is determined based on the upper limit of the first transmit power.

For example, the first uplink transmit power meets an expression 3:

$$P_{PUSCH,b,f,c(i,j,q_d,l)} =$$

$$\min \left\{ \begin{array}{l} P_{cmax,f,c}(i), \\ P_{o\_PUSCH,b,f,c}(j) + 10 \log_{10}(2^{\mu} \cdot M_{RB,b,f,c}^{PUSCH}(i)) + \alpha_{b,f,c}(j) \cdot PL_{b,f,c}(q_d) + \Delta_{TF,b,f,c}(i) + f_{b,f,c}(i,l) \end{array} \right\} \quad 3$$

$P_{PUSCH,b,f,c(i,j,q_d,l)}$ is the first uplink transmit power, $P_{cmax,f,c}(i)$ is the upper limit of the transmit power of the PUSCH, $P_{o\_PUSCH,b,f,c}(j)$ is initial transmit power of the PUSCH, $\mu$ is an impact factor of a transmission bandwidth on transmit power, $M_{RB,b,f,c}^{PUSCH}(i)$ is the transmission bandwidth, $\alpha_{b,f,c}(j)$ is a path loss conversion factor, $PL_{b,f,c}(q_d)$ is a downlink path loss between the terminal and the network device, $\Delta_{TF,b,f,c}(i)$ is an impact amount of a code rate on the transmit power, and $f_{b,f,c}(i, l)$ is a power adjustment amount indicated by the network device by using a transmit power control (transmit power control, TPC) command. Specifically, for $P_{PUSCH,b,f,c(i,j,q_d,l)}$, $P_{o\_PUSCH,b,f,c}(j)$, $\mu$, $M_{RB,b,f,c}^{PUSCH}(i)$, $\alpha_{b,f,c}(j)$, $PL_{b,f,c}(q_d)$, $\Delta_{TF,b,f,c}(i)$, and $f_{b,f,c}(i, l)$, refer to related descriptions in 3GPP TS 38.213 V15.6.0.

However, $P_{cmax,f,c}(i)$ is determined based on the second MPR and the maximum output power capability of the terminal, for example, $P_{cmax,f,c}(i)$ meets an expression 4:

$$P_{cmax,f,c}(i) = P_{max} - MPR \quad 4$$

$P_{max}$ is the maximum output power capability of the terminal, and the MPR is the second MPR.

Because the upper limit of the transmit power of the PUSCH used to carry the Msg3 is determined based on the maximum transmit capability of the terminal and the second MPR, and the second MPR is less than the first MPR, compared with determining the upper limit of the transmit power of the PUSCH used to carry the Msg3 based on the first MPR, this helps increase a possibility of the upper limit of the transmit power of the PUSCH, increase uplink transmit power of the Msg3, further helps increase a possibility of successfully accessing a network in the contention-based random access process, reduce a quantity of times of network freezing, and improve user experience.

507: The network device receives the Msg3 from the terminal, and sends the Msg4 to the terminal.

Further, in some embodiments, after receiving the Msg4 from the network device, the terminal first determines third MPR based on the PUSCH resource used to carry an RRC connection setup complete message and the waveform and the modulation scheme that are used. Then, the terminal reduces the third MPR by a second step to obtain fourth MPR, and determines, based on the fourth MPR and the maximum output power capability of the terminal, the upper limit of the transmit power of the PUSCH used to carry the RRC connection setup complete message. Then, second transmit power is determined based on the upper limit of the transmit power of the PUSCH used to carry the RRC connection setup complete message, and the RRC connection setup complete message is sent to the network device at the second transmit power. The RRC connection setup complete message is carried on the PUSCH and sent.

It should be noted that some or all of a waveform, a modulation scheme, and a resource location used to carry the RRC connection setup complete message that are used by the RRC connection setup complete message may be indicated by the network device to the terminal by using the Msg4, the Msg2, or other control information; or the part may also be predefined.

The second step used by the terminal to send the RRC connection setup complete message may be the same as or different from the first step used by the terminal to send the Msg3. For details, refer to the descriptions of the first step when the Msg3 is sent. Details are not described herein again.

It should be noted that in this embodiment of this application, in some other embodiments, step 503 to step 504 may be alternatively replaced with the following steps:

After receiving the RAR, the terminal determines, based on the maximum output power capability of the terminal and the second MPR, that the upper limit of the transmit power of the PUSCH used to carry the Msg3 is an upper limit of the first uplink transmit power. A value of the second MPR is a fixed value, and is less than the first MPR, for example, 0. Therefore, the first MPR does not need to be determined, a computation amount is reduced, and random access efficiency is improved. Similarly, for the RRC connection setup complete message that is carried on the PUSCH and that is in the RA process, the terminal may also determine the upper limit of the transmit power of the PUSCH as a first value based on the maximum output power capability of the terminal and the second MPR. The value of the second MPR is a fixed value, and is less than the first MPR.

In some other embodiments of this application, for an uplink message carried on the PUSCH after random access of the terminal is performed, an upper limit of uplink transmit power used by the terminal to send the uplink message is determined based on the maximum output power capability of the terminal and fifth MPR. The fifth MPR is MPR that is stored in the terminal and that corresponds to a waveform, a modulation scheme, and a resource location carrying the uplink message that are used by the uplink message. That is, after the terminal accesses the network, the MPR does not need to be reduced.

For example, the PUSCH resource is the outer RB, the modulation scheme is the QPSK, and the waveform is DFT-o-OFDM. MPR stored by the terminal for the outer RB, the QPSK, and the DFT-OFDM is 1 dB, that is, the first MPR is 1 dB, and the second MPR for the outer RB, the QPSK, and the DFT-OFDM is 0.5 dB. When the maximum transmit capability of the terminal is 23 dB, for the Msg3 or the RRC connection setup complete message, the upper limit of the transmit power of the PUSCH used to carry the Msg3 or the RRC connection setup complete message is 22.5 dB. After the terminal accesses the network, the upper limit of the transmit power of the PUSCH used to carry the uplink messages is 22 dB.

It should be noted that the uplink power control method shown in FIG. 5 may be further applied to the contention-based random access process shown in FIG. 2.

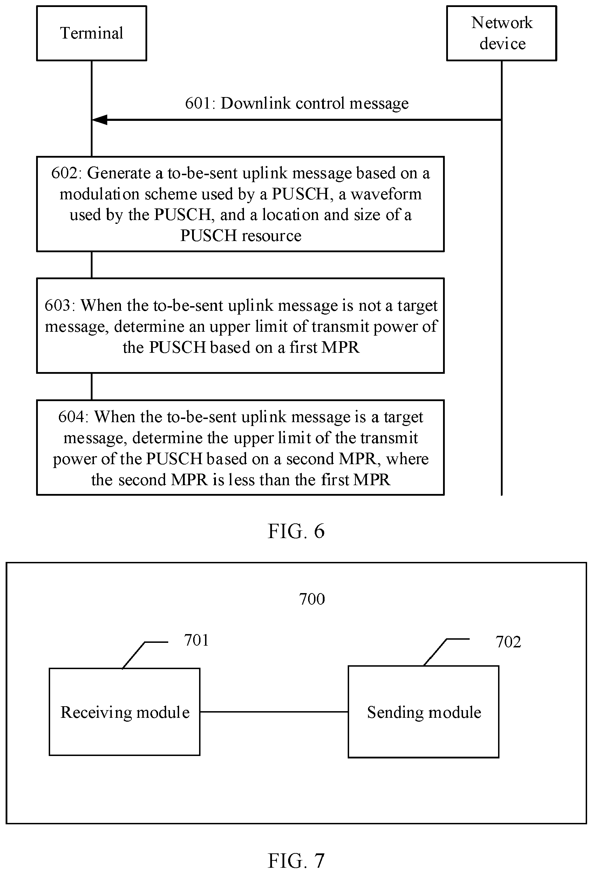

Based on the foregoing embodiments, an embodiment of this application provides an uplink power control method. As shown in FIG. 6, the method specifically includes the following steps:

601: A network device sends a downlink control message to a terminal. The downlink control message is used to indicate a modulation scheme used by a PUSCH and/or a PUSCH resource. Further, in some embodiments, the downlink control information is further used to indicate a waveform used by the PUSCH. Alternatively, the waveform used by the PUSCH may be indicated by the network device to the terminal by using RRC signaling. Alternatively, the waveform used by the PUSCH is predefined by using a protocol. This is not limited.

For example, the downlink control message in this embodiment of this application may be downlink control information (downlink control information, DCI) in a format 0_0 or 0_1. For example, for the DCI format 0_0, scrambling may be performed by a cell radio network temporary identifier (cell radio network temporary identifier, C-RNTI) or a configured scheduling radio network temporary identifier (configured scheduling radio network temporary identifier, CS-RNTI) or an MCS-C-RNTI. Frequency domain resource assignment (frequency domain resource assignment) is used to indicate the PUSCH resource, and a modulation and coding scheme (modulation and code scheme, MCS) is used to indicate the modulation scheme of the PUSCH, which is usually 5 bits. For related descriptions of the DCI formats 0_0 and 0_1, refer to related descriptions in 3GPP TS 38.212 V15.6.0. Details are not described herein again.

602: The terminal receives the downlink control message from the network device, and generates a to-be-sent uplink message based on the modulation scheme used by the PUSCH, a waveform used by the PUSCH, and the PUSCH resource.

603: When the to-be-sent uplink message is not a target message, the terminal sends the to-be-sent uplink message to the network device at first uplink transmit power.

For example, the first uplink transmit power is equal to maximum output power of the terminal minus first MPR. The first MPR is MPR that is stored in the terminal and that corresponds to the waveform used by the PUSCH, the modulation scheme, and the PUSCH resource. For another example, the terminal determines an upper limit of transmit power of the PUSCH based on the first MPR. Then, the terminal determines the first uplink transmit power based on the upper limit of the transmit power of the PUSCH that is determined based on the first MPR, and then sends the to-be-sent uplink message to the network device at the first uplink transmit power.

The target message is a message carried on the PUSCH in the contention-based SA process, for example, the Msg3 or an RRC connection setup complete message.

604: When the to-be-sent uplink message is a target message, the terminal sends the to-be-sent uplink message at second uplink transmit power. The second uplink transmit power is greater than the first uplink transmit power.

For example, the second uplink transmit power is the maximum output power of the terminal minus the second MPR, and the second MPR is less than the first MPR. For another example, the terminal determines the upper limit of the transmit power of the PUSCH based on the second MPR. Then, the terminal determines the second uplink transmit power based on the upper limit of the transmit power of the PUSCH that is determined based on the second MPR, and then sends the to-be-sent uplink message to the network device at the second uplink transmit power. The second MPR is less than the first MPR, and may be obtained by reducing the first MPR by a first step, or may be a fixed value, for example, 0. The first MPR is the MPR that is stored in the terminal and that corresponds to the waveform used by the PUSCH, the modulation scheme, and a PUSCH resource location.

When the to-be-sent uplink message is the target message, the upper limit of the transmit power of the PUSCH is determined based on the second MPR. This helps increase a possibility of an upper limit of transmit power of the terminal, and increase uplink transmit power in the RA process; and further helps increase a possibility of successfully accessing the network in the RA process, and reduce a quantity of times of network freezing, and improve user experience.

The foregoing embodiments may be used separately, or may be used in combination to implement different technical effects.

In the foregoing embodiments provided in this application, the communication method provided in embodiments of this application is described from a perspective of the terminal used as an execution body. To implement functions in the communication method provided in embodiments of this application, the terminal may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Same as the foregoing concept, as shown in FIG. 7, an embodiment of this application further provides an apparatus 700. The apparatus 700 includes a receiving module 701 and a sending module 702.

The receiving module 701 is configured to receive a downlink control message from a network device. The sending module 702 is configured to: when a to-be-sent uplink message is a target message, send the to-be-sent uplink message to the network device at first uplink transmit power; or when a to-be-sent uplink message is not a target message, send the to-be-sent uplink message to the network device at second uplink transmit power

For specific execution processes of the receiving module 701 and the sending module 702, refer to the descriptions in the foregoing method embodiment. Division into modules in embodiments of this application is an example, is merely division into logical functions, and may be other division during actual implementation. In addition, function modules in embodiments of this application may be integrated into one processor, or each of the modules may exist alone physically, or two or more modules may be integrated into one module. The integrated module may be implemented in a form of hardware, or may be implemented in a form of a software function module.

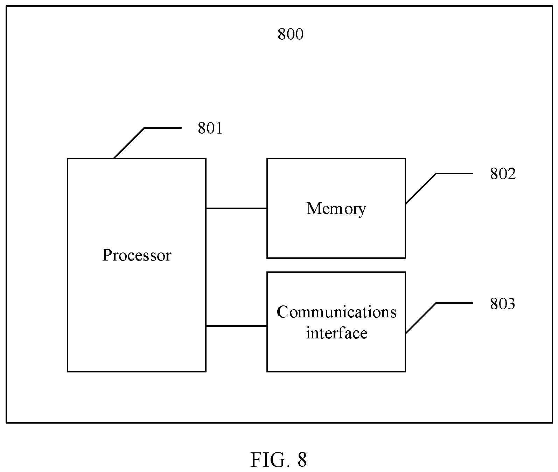

Same as the foregoing concept, as shown in FIG. 8, an embodiment of this application further provides an apparatus 800.

In an example, the apparatus 800 is configured to implement functions of the terminal in the foregoing method. The apparatus may be a terminal, or may be a chip or a chip system in a terminal. The apparatus 800 includes at least one processor 801, configured to implement functions of the terminal in the foregoing method. For example, the processor 801 may be configured to: when a to-be-sent uplink message is a target message, send the to-be-sent uplink message to a network device at first uplink transmit power; or when a to-be-sent uplink message is not a target message, send the to-be-sent uplink message to the network device at second uplink transmit power. For details, refer to the detailed descriptions in the method. Details are not described herein again.

In some embodiments, the apparatus 800 may further include at least one memory 802, configured to store a computer program. The memory 802 is coupled to the processor 801. Couplings in this embodiment of this application are indirect couplings or communication connections between apparatuses, units, or modules, may be implemented in an electrical form, a mechanical form, or another form, and are used for information exchange between the apparatuses, the units, or the modules. In another implementation, the memory 802 may alternatively be located outside the apparatus 800. The processor 801 may operate in collaboration with the memory 802. The processor 801 may execute the computer program stored in the memory 802. At least one of the at least one memory may be included in the processor

In some embodiments, the apparatus 800 may further include a communications interface 803, configured to communicate with another device through a transmission medium, so that an apparatus in the apparatus 800 can communicate with the another device. For example, the communications interface 803 may be a transceiver, a circuit, a bus, a module, or a communications interface of another type. The another device may be another terminal or a network device. The processor 801 sends and receives a message through the communications interface 803, and is configured to implement the method in the foregoing embodiments. For example, the communications interface 803 may be configured to receive a downlink control message from the network device.

In this embodiment of this application, a connection medium between the communications interface 803, the processor 801, and the memory 802 is not limited. For example, in this embodiment of this application, the memory 802, the processor 801, and the communications interface 803 may be connected through a bus in FIG. 8. The bus may be classified into an address bus, a data bus, a control bus, or the like.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

All or some of the methods in embodiments of this application may be implemented by software, hardware, firmware, or any combination thereof. When the software is used to implement embodiments, all or some of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims and their equivalent technologies.

**Claims**

1. An uplink power control method, wherein the method comprises:

   receiving, by a terminal, a downlink control message from a network device, wherein the downlink control message is used to indicate a modulation scheme used by a physical uplink shared channel PUSCH and/or a PUSCH resource; and
   when a to-be-sent uplink message is not a target message, sending, by the terminal, the to-be-sent uplink message to the network device at first uplink transmit power; or
   when a to-be-sent uplink message is a target message, sending, by the terminal, the to-be-sent uplink message to the network device at second uplink transmit power, wherein
   the target message is a message carried on the PUSCH in a random access process, the first uplink transmit power is determined based on first maximum power reduction MPR and a maximum output power capability of the terminal, the first MPR is obtained based on the modulation scheme used by the PUSCH, the PUSCH resource, and a waveform used by the PUSCH, and the second uplink transmit power is greater than the first uplink transmit power.

**2.** The method according to claim 1, wherein the first uplink transmit power is equal to maximum output power of the terminal minus the first MPR.

**3.** The method according to claim 1 or 2, wherein the second uplink transmit power is equal to the maximum output power of the terminal minus second MPR, and the second MPR is less than the first MPR.

**4.** The method according to claim 3, wherein the second MPR is obtained by reducing the first MPR by a first step, and the first step is greater than 0.

**5.** The method according to claim 4, wherein the first step is predefined, or the first step is determined by the terminal based on the second MPR.

**6.** The method according to claim 3, wherein the second MPR is 0.

**7.** The method according to any one of claims 1 to 6, wherein the target message is a message Msg3 and/or a radio resource control RRC connection setup complete message in the random access process.

**8.** The method according to any one of claims 1 to 7, wherein when the to-be-sent uplink message is not the target message, the to-be-sent uplink message is a message carried on the PUSCH after the terminal accesses a network.

**9.** The method according to any one of claims 1 to 8, wherein the modulation scheme used by the PUSCH is one of Pi/2BPSK, QPSK, 16QAM, 64QAM, and/or 256QAM.

**10.** The method according to any one of claims 1 to 9, wherein the waveform used by the PUSCH is one of discrete Fourier transform spread orthogonal frequency division multiplexing DFT-s-OFDM or cyclic prefix orthogonal frequency division multiplexing CP-OFDM.

**11.** The method according to any one of claims 1 to 10, wherein the downlink control message is further used to indicate the waveform used by the PUSCH; or
the terminal receives RRC signaling from the network device, wherein the RRC signaling is used to indicate the waveform used by the PUSCH.

**12.** A terminal, comprising a receiving module and a sending module, wherein

the receiving module is configured to receive a downlink control message from a network device, wherein the downlink control message is used to indicate a modulation scheme used by a physical uplink shared channel PUSCH and/or a PUSCH resource; and
the sending module is configured to: when a to-be-sent uplink message is not a target message, send the to-be-sent uplink message to the network device at first uplink transmit power; or when a to-be-sent uplink message is a target message, send the to-be-sent uplink message to the network device at second uplink transmit power, wherein
the target message is a message carried on the PUSCH in a random access process, the first uplink transmit power is determined based on first maximum power reduction MPR and a maximum output power capability of the terminal, the first MPR is obtained based on the modulation scheme used by the PUSCH, the PUSCH resource, and a waveform used by the PUSCH, and the second uplink transmit power is greater than the first uplink transmit power.

**13.** The terminal according to claim 12, wherein the first uplink transmit power is equal to maximum output power of the terminal minus the first MPR.

**14.** The terminal according to claim 12 or 13, wherein the second uplink transmit power is equal to the maximum output power of the terminal minus second MPR, and the second MPR is less than the first MPR.

**15.** The terminal according to claim 14, wherein the second MPR is obtained by reducing the first MPR by a first step, and the first step is greater than 0.

**16.** The terminal according to claim 15, wherein the first step is predefined, or the first step is determined by the terminal based on the second MPR.

17. The terminal according to claim 14, wherein the second MPR is 0.

18. The terminal according to any one of claims 12 to 17, wherein the target message is a message Msg3 and/or a radio resource control RRC connection setup complete message in the random access process.

19. The terminal according to any one of claims 12 to 18, wherein when the to-be-sent uplink message is not the target message, the to-be-sent uplink message is a message carried on the PUSCH after the terminal accesses a network.

20. The terminal according to any one of claims 12 to 19, wherein the modulation scheme used by the PUSCH is one of Pi/2BPSK, QPSK, 16QAM, 64QAM, and/or 256QAM.

21. The terminal according to any one of claims 12 to 20, wherein the waveform used by the PUSCH is one of discrete Fourier transform spread orthogonal frequency division multiplexing DFT-s-OFDM or cyclic prefix orthogonal frequency division multiplexing CP-OFDM.

22. A chip, comprising a processor and a communications interface, wherein

the communications interface is configured to receive a downlink control message from a network device, wherein the downlink control message is used to indicate a modulation scheme used by a physical uplink shared channel PUSCH and/or a PUSCH resource; and

the processor is configured to: when a to-be-sent uplink message is not a target message, control the communications interface to send the to-be-sent uplink message to the network device at first uplink transmit power; or when a to-be-sent uplink message is a target message, control the communications interface to send the to-be-sent uplink message to the network device at second uplink transmit power, wherein

the target message is a message carried on the PUSCH in a random access process, the first uplink transmit power is determined based on first maximum power reduction MPR and a maximum output power capability of the chip, the first MPR is obtained based on the modulation scheme used by the PUSCH, the PUSCH resource, and a waveform used by the PUSCH, and the second uplink transmit power is greater than the first uplink transmit power.

23. The chip according to claim 22, wherein the first uplink transmit power is equal to maximum output power of the chip minus the first MPR.

24. The chip according to claim 22 or 23, wherein the second uplink transmit power is equal to the maximum output power of the chip minus second MPR, and the second MPR is less than the first MPR.

25. The chip according to claim 24, wherein the second MPR is obtained by reducing the first MPR by a first step, and the first step is greater than 0.

26. The chip according to claim 25, wherein the first step is predefined, or the first step is determined by the terminal based on the second MPR.

27. The chip according to claim 24, wherein the second MPR is 0.

28. The chip according to any one of claims 22 to 27, wherein the target message is a message Msg3 and/or a radio resource control RRC connection setup complete message in the random access process.

29. The chip according to any one of claims 22 to 28, wherein when the to-be-sent uplink message is not the target message, the to-be-sent uplink message is a message carried on the PUSCH after the terminal accesses a network.

30. A computer-readable storage medium, wherein a computer program is stored, and when the computer program is executed by a computer, the computer is enabled to perform the method according to any one of claims 1 to 11.

Terminal

Network device

101: Msg1 (message 1)

102: Msg2 (message 2)

103: Msg3 (message 3)

104: Msg4 (message 4)

RRC connection setup complete message

FIG. 1

Terminal

Network device

201: MsgA (message A)

202: MsgB (Message B)

RRC connection setup complete message

FIG. 2

Frequency f

f6
f5

f4

f3

f2
f1

Time t

FIG. 3

Network device

Terminal

FIG. 4

FIG. 5

EP 4 156 800 A1

```
┌─────────┐                                    ┌──────────┐
│Terminal │                                    │ Network  │
│         │                                    │ device   │
└────┬────┘                                    └─────┬────┘
     │                                               │
     │        601: Downlink control message          │
     │◄──────────────────────────────────────────────│
     │                                               │
┌────┴──────────────────────────────────────┐        │
│ 602: Generate a to-be-sent uplink message  │        │
│ based on a modulation scheme used by a     │        │
│ PUSCH, a waveform used by the PUSCH, and a │        │
│ location and size of a PUSCH resource      │        │
└────┬───────────────────────────────────────┘        │
     │                                               │
┌────┴──────────────────────────────────────┐        │
│ 603: When the to-be-sent uplink message is │        │
│ not a target message, determine an upper   │        │
│ limit of transmit power of the PUSCH based │        │
│ on a first MPR                             │        │
└────┬───────────────────────────────────────┘        │
     │                                               │
┌────┴──────────────────────────────────────┐        │
│ 604: When the to-be-sent uplink message is │        │
│ a target message, determine the upper      │        │
│ limit of the transmit power of the PUSCH   │        │
│ based on a second MPR, where the second    │        │
│ MPR is less than the first MPR             │        │
└────────────────────────────────────────────┘        │
```

FIG. 6

```
┌──────────────────────────────────────────────────────────────┐
│                            700                                 │
│                                                                │
│         ╱─ 701                        ╱─ 702                   │
│   ┌──────────────────┐         ┌──────────────────┐           │
│   │                  │         │                  │           │
│   │ Receiving module ├─────────┤  Sending module  │           │
│   │                  │         │                  │           │
│   └──────────────────┘         └──────────────────┘           │
│                                                                │
└──────────────────────────────────────────────────────────────┘
```

FIG. 7

20

800

801

Processor

Memory 802

Communications interface 803

FIG. 8

## INTERNATIONAL SEARCH REPORT

| International application No. |
| --- |
| **PCT/CN2021/080518** |

**A.    CLASSIFICATION OF SUBJECT MATTER**

H04W 52/14(2009.01)i

According to International Patent Classification (IPC) or to both national classification and IPC

**B.    FIELDS SEARCHED**

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT; WPI; EPODOC; CNKI: 调制方式, 波形, 下行控制, 最大功率回退, 资源, MPR, maximun output power reduction, PUSCH, modulation mode, waveform, downlink control, resource

**C.    DOCUMENTS CONSIDERED TO BE RELEVANT**

| Category* | Citation of document, with indication, where appropriate, of the relevant passages | Relevant to claim No. |
| --- | --- | --- |
| A | CN 102348268 A (ZTE CORPORATION) 08 February 2012 (2012-02-08) description, paragraphs [0006]-[0026] | 1-30 |
| A | US 2013316758 A1 (NTT DOCOMO, INC.) 28 November 2013 (2013-11-28) entire document | 1-30 |
| A | CN 103826294 A (CHINA ACADEMY OF TELECOMMUNICATIONS TECHNOLOGY) 28 May 2014 (2014-05-28) entire document | 1-30 |
| A | WO 2012058945 A1 (ZTE CORPORATION) 10 May 2012 (2012-05-10) entire document | 1-30 |
| A | WO 2013023496 A1 (ZTE CORPORATION) 21 February 2013 (2013-02-21) entire document | 1-30 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **20 May 2021** | **10 June 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/080518**

| Patent document cited in search report | | | Publication date (day/month/year) | Patent family member(s) | | | Publication date (day/month/year) |
|---|---|---|---|---|---|---|---|
| CN | 102348268 | A | 08 February 2012 | WO | 2012016449 | A1 | 09 February 2012 |
| US | 2013316758 | A1 | 28 November 2013 | CN | 103370965 | A | 23 October 2013 |
| | | | | WO | 2012111676 | A1 | 23 August 2012 |
| | | | | CA | 2826368 | A1 | 23 August 2012 |
| | | | | DK | 2677806 | T3 | 06 June 2016 |
| | | | | JP | 2012169873 | A | 06 September 2012 |
| | | | | KR | 20130105742 | A | 25 September 2013 |
| | | | | ES | 2581730 | T3 | 07 September 2016 |
| | | | | EP | 2677806 | A1 | 25 December 2013 |
| CN | 103826294 | A | 28 May 2014 | None | | | |
| WO | 2012058945 | A1 | 10 May 2012 | CN | 102469495 | A | 23 May 2012 |
| WO | 2013023496 | A1 | 21 February 2013 | CN | 102932892 | A | 13 February 2013 |

Form PCT/ISA/210 (patent family annex) (January 2015)

**EP 4 156 800 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010617617